# NEW EUROPEAN PATENT SPECIFICATION

(11) **EP 1 431 262 B2**
(45) Date of publication and mention of the opposition decision: **22.07.2015**
(45) Mention of the grant of the patent: 10.01.2007
(21) Application number: 03028873.2
(22) Date of filing: 16.12.2003
(51) Int. Cl.: C05F 17/02, C05F 17/00, C02F 11/02

(54) **A method and a plant for the aerobic treatment of materials having a highly fermentable organic component**
Verfahren und Anlage zur aeroben Behandlung von Materialien enthaltend eine fermentierbare organische Substanz
Procédé et installation pour le traitement aérobie de matériaux contenant une substance organique fermentiscible

(30) Priority: 18.12.2002 IT TO20021097
(43) Date of publication of application: 23.06.2004
(73) Proprietor: ENTSORGAFIN SpA, 15057 Tortona (AL) (IT)
(72) Inventor: Cella Mazzariol, Pietro Paolo, 15057 Tortona (AL) (IT); Galanzino, Gianfrancesco, 15057 Tortona (AL) (IT)
(74) Representative: DREISS Patentanwälte PartG mbB

(56) References cited:
- EP-A- 0 040 147
- EP-A- 0 065 495
- EP-A1- 0 706 839
- EP-A2- 1 386 675
- WO-A-97/01519
- WO-A-97/22765
- FR-A- 2 819 504
- FR-A- 2 820 421
- Technical Description of the waste treatment plant of the town of Cavaglià (Italy) published by the A.S.R.A.B. S.P.A. (Waster Disposal Company of the Biella Area) - only in Italian language
- Technical description of the waste treatment plant of the town of Giussago (Italy) published by the secretary of the regione Lombardia - only in Italian language
- Technical description of the waste treatment plant of the town of Villafalletto (Italy) published by the secretary of the environment consortium of Saluzzo - only in Italian language

## Description

### DISCLOSURE OF THE INVENTION

The present invention refers to a method for the aerobic treatment of wastes having a highly fermentescible organic component and to the corresponding plant to carry out said method.

In particular, the invention concerns a method and a plant for the aerobic treatment of matrices such as organic fractions selected through a shredding/sieving process (SOF), organic fractions of the municipal solid waste (MSWOF) separately collected, biological, industrial and urban sludges, and municipal solid waste (MSW).

The present invention is more particularly directed to obtain final products having high properties of homogeneity in terms of biological stability, sanitation and drying, the whole advantageously in comparison with the conventional systems. The products obtained, depending on the inlet matrices, can be: organic fertiliser or compost from good quality organic matrices, stabilised waste, refuse-derived fuels (RDF) by refining stabilised waste, low quality compost from solid waste subjected to a shredding/sieving process upstream from the aerobic treatment.

Methods are known for the aerobic treatment of materials containing putrescible matter.

For the treatment, in particular, of the municipal solid waste, which generally require a mechanical treatment before passing on to the aerobic phase, it is possible to classify two types of process plants, widespread in Italy as well as in Europe.

Process plants with differentiation of flows: they perform mechanical-biological treatments wherein a mechanical pre-treatment of the waste at the entrance of the plant allows to attain an "organic" fraction (under-sieve fraction having Ø < 50 ÷ 90 mm) intended to be subjected to the biological treatment and a dryer fraction (over-sieve fraction having Ø > 50 ÷ 90 mm) intended to be disposed of in a landfill site or to be utilised for energy purposes.

Process plants with single flow: they perform mechanical-biological treatments wherein the mechanical treatment is limited to a simple crushing of the whole waste at the entrance of the plant; subsequently the waste is subjected to a biological treatment.

In this latter case also the stiff and dry components of the waste, by remaining inside the mass to be fermented, secure to the mass itself a certain porosity and permeability to the air and, at the same time, they are subjected to a sanitising action due to the temperatures of the biological process.

The process plants with single flow, developed subsequently to the process plants with differentiation of flows, have been meeting in the latest years a considerable success in their applications because they are more advantageous for different reasons.

Mainly, the process plants with single flow are advantageous because: they occupy lower areas at the same quantity of treated wastes, they have a higher productive yield as far as the fuel production is concerned, and they allow to obtain a product more homogeneous in terms of drying and sanitation. These advantages are mainly due to the fact that these plants are not affected by the seasonal variations in humidity of the waste at the entrance as well as by the presence of components still putrescible (such as, for instance, food cans and napkins), drawbacks that in the systems with differentiation of flows the sole sieving can not resolve.

Both the process plants with single flow and the process plants with differentiation of flows provide a biological treatment through an aerobic phase of fermentation.

Italian Patent No. IT 1,300,064 discloses a method for the treatment of wastes of organic and biological nature, said method providing to subject the wastes to a stage of accelerated fermentation by means of air suction through the waste pile placed inside an enclosed environment above a paving provided with holes and to a subsequent stage of digestion inside a second enclosed environment, where the wastes arrive at upon completion of the phase of accelerated fermentation.

European Patent No. EP 706,839 discloses a method for the treatment of municipal solid waste, said method providing to subject the whole mass of the waste to a stage of accelerated fermentation by means of air suction through the waste pile placed inside an enclosed environment above a paving provided with holes.

Both the systems with single flow and the systems with differentiation of flows, in case of treatment of municipal solid waste, always provide the breaking of the waste bags.

In the past, to perform the above operation, devices, so-called bags-breakers, were used, such devices being based upon various mechanical principles, but always characterised by poor productivity due to the frequent cloggings and breakings and to, therefore, as many frequent maintenance operations.

Shredders have become widespread to replace the above-mentioned devices, said shredders having the advantage to allow a higher productivity and automation, by avoiding the waste initial selection in order to separate those pieces that otherwise will create cloggings and inconveniences when employing conventional bags-breakers.

Shredders of the slow rotation type (maximum about 80 rpm) are preferred because they have solved the safety problems typical of the fast hammer mill.

Compared to the conventional bags-breakers, the required energy consumption, the treated material being equal, is considerably higher (3 to 4 times) as well as the wears of the mechanical parts.

Another drawback of the shredders is the squashing of some pieces present inside the waste such as metal cans, with consequent encapsulation of the organic matter thereinside, which therefore results separable with difficulty.

Another drawback of the shredders is that the several wrappings made of plastic films or generally plastic cloths pass through the slow shredders unbroken or only partially broken, therefore causing an inhomogeneous air distribution within the material during the phases of aerobic fermentation.

In known methods, and in the corresponding plants, municipal solid waste mechanically pre-treated as well as other materials cited hereinbefore intended to be subjected to the aerobic fermentation, if necessary mixed with a structuring product, are aerated under controlled conditions to supply the oxygen needed by the micro-organisms responsible of the biological components demolition process by means of the aerobic fermentation that spontaneously initiates.

The material aeration, which guarantees the oxygen supply to the mass, can take place by a more or less vigorous turning of the mass itself (dynamic systems) or, except for the loading and unloading operations, by means of the sole air supply through forced ventilation (static systems) or by a combination of these two systems.

The choice of the sole forced ventilation is being increasingly employed because it is more efficient from the point of view of the energy saving, of the occupied areas, of the management costs in general, of the higher compatibility with the surroundings and with the work environment, due to the fact that said forced ventilation avoids the inconveniences of the mechanical systems, the wears typical of the turning apparatuses and the phenomena of microbiological contamination of environments and products.

Methods and plants employing forced air are disclosed, for instance, in WO97/22765 and WO97/01519, in which ventilation of wastes is effected by means of a ventilated paving; more particularly, WO97/01519 discloses an open-air windrow system for composting processes wherein a blower, which is located between a first and a second treatment zone, draws ambient air through early stage compost overlying said first treatment zone through an aeration floor into a plenum, the curing process of said early stage compost being accelerated by fully aerating it, and then disperses the malodorous exhausted air through more mature compost overlying said second treatment zone, said more mature compost acting both as a curing medium and as a biofilter.

Methods and relevant plants employing bi-directional air flow are known, for instance, from FR2820421, which discloses a plant for the treatment of organic wastes employing both blowing and aspirating air flows, each controlled by an external system connected to a canalization device for the distribution of the air through a ventilated paving.

EP0040147 discloses a plant for the treatment of organic wastes consisting of a plurality of open-air fermentation chambers or buildings into which wastes are treated by means of both blowing and aspirating air flows passing through a ventilated paving; said ventilated paving is formed by units provided with apertures carrying canalisations inside them, the canalisations being provided with holes corresponding to ducts in said units, this way realizing a common canalisations system for aspirating or blowing air into all the fermentation chambers or buildings directly fed by a common collector and a single blower that are provided with valves controlled by a central system allowing the inversion of the air flows from blowing to aspiration and vice-versa.

FR2819504 discloses a plant for composting sludges from waste water treatment stations, said plant consisting of at least a composting cubicle whose floor comprises a plurality of air suction/insufflation holes and corresponding distribution lines, said holes being connected, through said corresponding lines, to a suction/insufflation collector on which a fan is mounted; said fan, with which each composting cubicle is equipped, can be operated in alternate directions, i.e. air is sucked through the sludges so to carry out their aerobic fermentation and air is blown inside the cubicle upon the sludges charging and discharging steps.

One of the drawbacks of the above plants is that, as single blowers or fans are provided for generating blowing and aspiration air flows, these air flows can not be generated separately and independently.

Another problem of the known methods, and of the corresponding plants, derives from the fact that the drying of the waste is significantly faster where the organic matter comes into contact with fresh air.

The fast drying of the layers that first come into contact with the ventilation air does not allow to maintain inside the material temperatures higher than 55 °C for periods equal or longer than 3 days and it consequently does not allow a sufficient sanitation, as requested by the main reference regulations.

Another drawback of these methods, and of the corresponding plants, is the low level of biological stability reached from the layers that dry more quickly; this implies a different stability degree among the different layers of materials and therefore an inhomogeneity of the outlet product.

Furthermore, in the known plants, the top of the pile of the waste subjected to the treatment, being generally at a temperature below 45 °C, allows the overgrowth of insects and parasites (such as flies, etc.), a phenomenon generally incompatible with the surroundings where the plant is installed.

A common problem to all the organic waste treatment plants is that, during the winter season, a slowing down in the fermentation process steady-state start-up occurs, or its complete stop.

The reason of this phenomenon has always been given to the concomitance of climatic factors (particularly low temperatures) and of material having not favourable compositions.

Actually, the far and away prevailing factor is the waste temperature, which in the plant can reach very low values, even around or lower than 0 °C.

Such conditions strongly inhibit the kinetics of the microbial metabolism and imply a prolongation (two or three times) of the biological process start-up times, which causes a considerable increase (+ 0 ÷ 30 %) of the overall process duration; in some extreme cases, such condition of the material can also completely inhibit the start-up of the process itself.

As a consequence, in plants not being oversized with respect to the steady-state operation requirements, such as, i.e., to allow a prolongation of the process times, during certain period of the year, the final material can not meet the production specifications.

The main purpose of the present invention is therefore to provide a method and a plant for the aerobic treatment of materials having a highly fermentescible organic component, said method and said plant allowing an homogeneous reaction of the organic material existing in the waste pile.

A further purpose of the present invention is to provide a method and a plant having low consumption and economical management.

A further purpose of the present invention is to provide a method and a plant allowing a better elimination of the unwanted materials during the aerobic treatment phase, so to permit to obtain in said aerobic treatment phase final products having high levels of homogeneity in terms of biological stability, sanitation, drying and control of the insects overgrowth.

Last but not least purpose of the present invention is to provide a method and a plant allowing to maintain a constant conformity of the product obtained with respect to the required specifications independently from the seasonal factors.

The aforementioned and other purposes of the invention are achieved by the method and the plant for the aerobic treatment of materials having a highly fermentescible organic component, as defined in claims 1 and 14 respectively.

According to the invention, thanks to the air homogeneous distribution both in the top-down direction, by sucking, and in the opposite direction, by blowing in, the advantage of obtaining an homogeneously treated material is achieved; furthermore, it is possible, in this way, to avoid the mechanical mixing and therefore the mechanical parts that move the material being still not sufficiently sanitised and stabilised.

Still according to the invention, thanks to the phase of mechanical pre-treatment by sieving, which permits the bags breaking and the separation of the sole materials that will going to create problems in the subsequent biological treatment, the advantage of reducing, until halving, the costs due to energy consumption and plant management is achieved.

Furthermore, advantageously, the provision of means fit for the stand-alone and independent management of the air flows, allows the heating by blowing in and sucking of the material in the process start-up phase with hot air coming from the process itself or with recycled hot air coming from other plants, or still with air heated through suitable devices; advantageously, in this way, the drawbacks due to the cold material, which can occur during the winter season, are avoided.

Furthermore, advantageously, by inoculating the material with the lecheate produced during the biological process a further possibility of reducing the biological process start-up time is attained and, at the same time, the burden of disposing of the substances produced for percolation from the waste (lecheate) is cancelled.

Furthermore, the paving being partialised into a plurality of independent sections of fermentation/bio-oxidation, a possibility is attained of managing separately and independently the different sections, for instance by distributing air in some of said sections in a top-down direction (descending flow) and in some other sections in an opposite direction, bottom-up direction (ascending flow).

Further characteristics and advantages will become evident from the description of a preferred embodiment of the present invention, which will be better disclosed with reference to the attached drawings, wherein:
- figure 1 is a block diagram of the phases of the method according to the invention;
- figure 2 is a schematic section of the plant area where the phase of fermentation/bio-oxidation takes place.

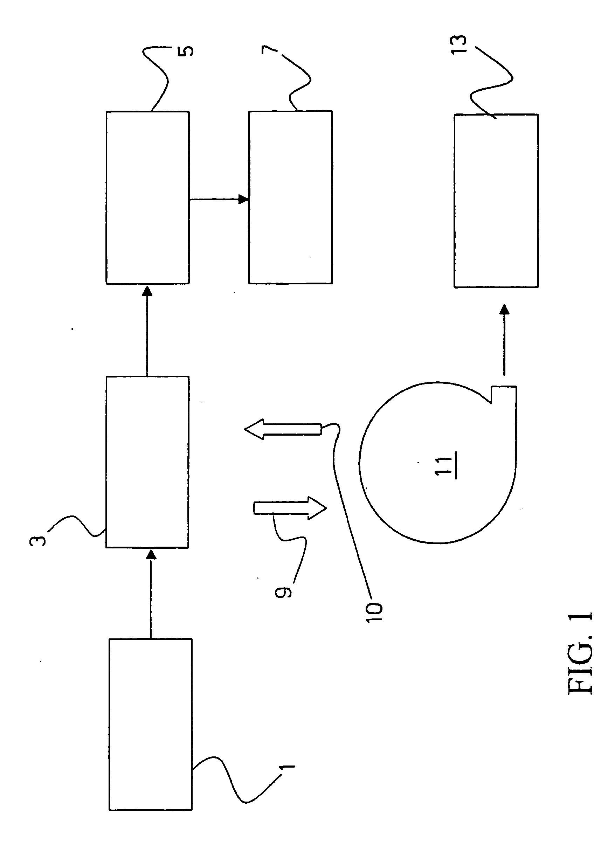

Referring to Figure 1, an aerobic method according to the invention is illustrated, comprising a phase 1 of pre-treatment, a phase 3 of fermentation/bio-oxidation of the wastes arranged in piles, an optional phase 5 of slow digestion, consisting in the completion of the transformation process of organic matter for which humification is required and a phase 7 of refining.

According to the invention the wastes, in case not coming from previous shredding/sieving operations, are at the beginning subjected to phase 1 consisting in the treatment of the inlet matrix through bags-breaker devices having high productive capacity and in the separation of unwanted materials, in particular wrappings made of plastic films, through sieves having large holes, in the range 12 to 24 cm of diameter, preferably holes of 20 cm of diameter; alternately, separation systems of different type, for instance aeraulic, can be employed.

The treatment by bags-breakers and sieving can be unified by means of specific bags-breaker sieves having a rotation speed higher than the conventional ones. The wrappings and the plastic films can be recovered or they can be addressed to possible solid fuel production lines. During this phase a possible mixing with structuring material can occur.

The material, after the mechanical treatment, can be heated through ventilation with hot air in suction or in blowing in; said hot air can be process hot air or air suitably heated by other sources; during this phase the material could also be bathed with percolation water coming from the biologic process, acting as an activator, in order to accelerate the biological process start-up; the percolation water can be further enriched with enzymatic compounds acting as catalysts.

The wastes are then arranged in piles and subjected to the phase 3 of fermentation/bio-oxidation by means of forced air; during this phase, according to the invention, the waste pile is passed through by air flows alternating in two opposite directions, shown in figure respectively with arrows 9 and 10. According to a preferred embodiment of the method according to the invention, air is sucked downwards, through the piles and the underlying slotted floor on which said piles are located, from the enclosed building - arrow 9 - and it is blown in into the piles through the slotted paving - arrow 10 - after having been collected from the outside environment. The opposite directions flows are obtained by means of a system consisting of fans 11 that, thanks to a by-pass system, disclosed hereinbelow, allows both the suction of the air and the blowing in.

The air used in one of said sections of fermentation/bio-oxidation during phase 3, after having been sucked through the waste pile is preferably recycled inside the plant - for a further passage through said pile - or it is blown in into another of said sections of fermentation/bio-oxidation, or still it is filtered through a bio-filter 13 and from here released into the atmosphere.

During phase 7, consisting of eliminating the unwanted parts (glass, plastics, metals, crushed stone, sand, etc.) and sieving to separate the coarser pieces so to obtain the desired size, the material comes to meet the market specifications; phase 7 employs technologies known to a person skilled in the art and it will not therefore disclosed in detail.

On the whole, according to the invention, the method so defined allows to obtain final products having high properties of homogeneity that, depending on the inlet matrices, can be: organic fertiliser or compost from good quality organic matrices, stabilised wastes from solid wastes, waste-derived fuels or WDF by refining stabilised wastes, low quality compost from solid wastes subjected to a shredding/sieving process upstream from the aerobic treatment.

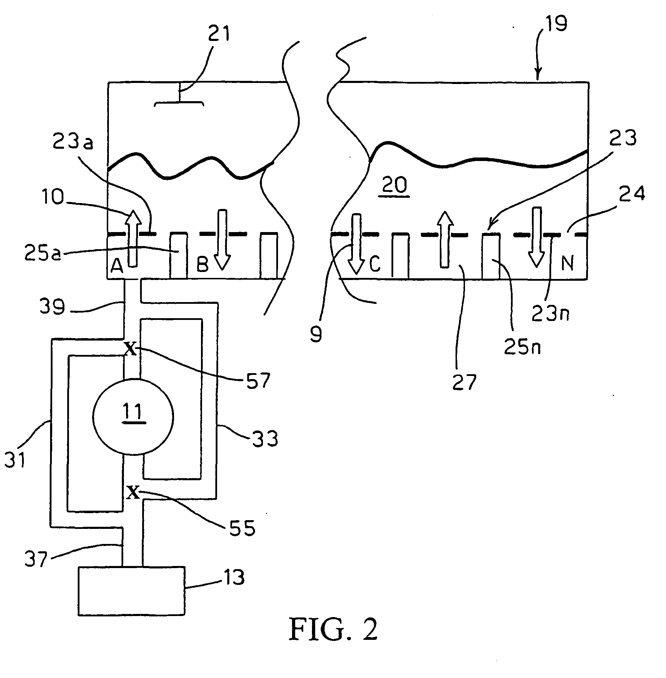

Referring now to Figure 2, according to the invention, independently from the inlet matrix kind, the wastes to be treated are arranged, for phase 3 of fermentation/bio-oxidation, in piles 20 inside an enclosed building 19 provided with a ventilated paving 23.

Said paving 23 is preferably formed by a plurality of concrete tiles 23a...23n provided with flared slots 24, said tiles 23a...23n being supported on prefabricated partitions 25a...25n so that a plenum 27 to equalise the pressure is formed underneath.

When the waste pile 20 has been placed on said ventilated paving 23 inside the enclosed building 19, the homogeneous and slow-speeded air distribution is carried out both in the top-down direction - arrows 9 - by suction through the paving 23 and in the opposite direction - arrows 10 -, by blowing in, always through the paving 23.

The air flows in the two opposite directions are obtained by fans 11 as well as by a system of ducts and valves to realise the air flow inversion.

Air flowing in the top-down direction through the pile 20 causes the aerobic fermentation, which proceeds more quickly above all at the top of said pile.

In order to allow also to the bottom portion of the pile 20, in contact with the floor, to have a high reaction efficiency, according to the invention the air flow is inverted and the air collected from the outside environment is blown in inside the enclosed building 19 through the ventilated paving 23, making it flow through the waste pile 20.

According to the invention it is provided that the paving is partialised in a plurality of independent sections A,B,C,..N of fermentation/bio-oxidation, such a configuration allowing to separately and independently manage the different sections with independent air flows.

In order to maintain the whole structure under a negative pressure, so avoiding leakages of foul-smelling gaseous substances and even the introduction in the outside environment of pathological charges during the plant operation, in addition to possible dedicated extractor fans, the air flows are adjusted so that the sections where the air is sucked are more numerous than the sections where the air is blown in.

The air used in one of said sections of fermentation/bio-oxidation during phase 3 of fermentation/bio-oxidation, after having been sucked through the waste pile 20 is either recycled inside the plant - for a further passage through said pile - or it is blown in into another of said sections of fermentation/bio-oxidation providing in this way to the waste heating, and the possible exceeding air is filtered and then released into the outside.

To the purpose of purificating the air before releasing it into the outside environment, a bio-filter 13 is provided, for instance a filtering bed formed by a layer of a mixture being composed of the final product of the composting process of the "green" portion only, cleansed from foreign matter such as paper, cardboard, plastics and having size in the range 2.5 to 12 cm, and of poplar bark.

Said filtering bed is preferably placed on a paving formed by grating tiles made of polypropylene reinforced with fibreglass and supported on frustro-conical supports similarly made of polypropylene reinforced with fibreglass.

In order to maintain the filtering bed humidity at the desired values, a supply line for the water of humidification and suitable sprinklers are provided.

Alternately to the bio-filter 13, different apparatuses and technologies currently available can be employed, both of the chemical and of the physical type. Largely widespread apparatuses, so-called spray towers or scrubbers as well as the system based on adsorption processes on activated carbon or other matrices of recent adoption (zeolites, silica-gel, etc.), belong to the first kind. The technologies based on the thermal oxidation, such as systems with direct flame, without flame, or catalytic, which in the most recent technological applications assure high safety levels with cost more and more competitive, belong to the second kind.

The wastes, after the phase of fermentation/bio-oxidation, are subjected to the phase 5 of slow digestion; according to the known prior art, said slow digestion can be performed in a dedicated area, provided with a plurality of blowing in rakes, each of them is formed by a plurality of blowing in pipes, provided with blowing in little horns; alternately said slow digestion can be directly performed inside the enclosed building 19, in a section different from the one where the phase 3 of fermentation/bio-oxidation has been carried out.

Preferably the plant according to the invention provides, inside the enclosed building 19, a transport system with travelling crane (or equivalent handling system) 21, through which the wastes are moved from one area to another one of the building itself; this allows, as aforementioned, to possibly perform inside the enclosed building 19 also phase 5 of slow digestion, so avoiding to displace the partially humified and still partially foul-smelling pile to the outside, or in a second enclosed environment.

In case the slow digestion takes place in the same building 19, or similar dedicated building, advantageously the same principle providing the passage through the wastes of air flows alternately in two opposite directions could be applied.

Advantageously, said transport system with travelling crane can also be used to turn and handle the wastes subjected to phase 3 of fermentation/bio-oxidation to further increase the treatment efficiency.

Still referring to Figure 2, according to the invention means are provided for generating the alternate air flow through the waste piles 20 during phase 3 of fermentation/bio-oxidation, said means comprising by-passes 31 and 33 and a pair of three-ways valves 55,57 automatically actuated by the computerised system (not shown) for the plant automated management.

During the suction phase, the fan 11 sucks air from the section underlying the floor 23 of the enclosed building 19 through the duct 39; the three-ways valves 55,57 are positioned so to close the ducts of the by-passes 31 and 33, which are therefore excluded, and the sucked air can be discharged through the duct 37.

During the blowing in phase, the three-ways valves 55,57 are positioned so to close the ducts 39 and 37 in correspondence of the by-passes 31 and 33 and the by-passes are therefore free for the passage of the air, which is therefore sucked through the duct 37 and discharged through the duct 39 in the section underlying the floor 23 of the enclosed building 19 and from here blown in through the waste pile 20.

Advantageously, according to the invention, the fans 11 can be continuously operated by acting, for the flow inversion, only upon the valves 55,57 that actuate the by-passes 31,33.

The air flow inversion, i.e. the change from the suction phase to the blowing in phase and vice versa, is determined, preferably in an automatic way, by collecting significant parameters of the microbial activity, such as for instance the oxygen content, the temperature of the material or of the air coming therefrom. Such parameters, individually or in combination, permit to adjust the process in accordance with management schemes that are developed on kinetics known or identified on purpose.

Notwithstanding the invention has been disclosed with reference to a method providing that both the phase of fermentation/bio-oxidation and the phase of slow digestion are carried out inside the same enclosed building, similar application and results can be achieved in case the slow digestion occurs in a different environment, for instance outside, sheltered under a roofing.

## Claims

1. A method for the aerobic treatment of materials having a highly fermentescible organic component in a plant comprising an enclosed building (19) defining an inner space for containing at least one pile (20) of wastes and provided with a ventilated paving (23) on which the wastes to be treated during a phase (3) of fermentation/bio-oxidation performed through forced air are laid in and through which passing air flows are provided, and a plenum (27) defined below said ventilated paving (23) to equalise the pressure formed underneath, said ventilated paving (23) being subdivided in a number of independent sections (A...N), each of said sections being equipped with means (11) for generating a corresponding independent air flow, said method comprising the steps of:
- introducing at least one pile (20) of wastes to be treated into said enclosed building (19) and making said wastes laying on said ventilated paving (23);
- subjecting said at least one pile (20) of wastes to said phase (3) of fermentation/biooxidation through forced air by means of separate and independent air flows passing through said sections (A...N) of said ventilated paving (23);
said method being **characterized in that** said air flows alternates in two opposite directions by blowing according to a down-top direction and aspirating according to a top-down direction;
said phase (3) of fermentation/bio-oxidation being carried out by making flow a series of air flows (9,10) through said at least one waste pile (20), said air flows being directed along substantially parallel directions, some of said flows in one direction (9) and the other ones in the opposite direction (10); some of said air flows (9,10) being top-down directed and some others being bottom-up directed with respect to said at least one pile (20).

2. A method according to claim 1, wherein said flows (9,10) are generated by sucking or by blowing in air through said at least one pile (20).

3. A method according to claim 2, wherein the air flow-rate of said flows is maintained such that the air flow-rate sucked through said at least one pile (20) is higher than the blown in one.

4. A method according to any of the preceding claims, wherein upstream from said phase (3) of fermentation/bio-oxidation is provided a phase (1) of pre-treatment carried out through one or more bags-breaker devices and/or one or more sieves.

5. A method according to claim 4, wherein said sieves have holes having the diameter in the range 12 to 24 cm, preferably 20 cm.

6. A method according to claim 4, wherein said treatment through bags-breakers and said sieving are unified by means of specific bags-breaker sieves having high rotation speed.

7. A method according to claim 4, wherein between said phase (1) of pre-treatment and said phase (3) of fermentation/bio-oxidation a phase of mixing of the wastes with structuring material is provided.

8. A method according to claim 7, wherein between said mixing phase and said phase (3) of fermentation/bio-oxidation a phase is provided during which percolation water is being inoculated, said percolation water being produced during the biological process of fermentation.

9. A method according to any of the preceding claims, wherein downstream of said phase (3) of fermentation/bio-oxidation the following phases are provided:
- slow digestion (5) through blowing in, consisting in the completion of the organic matter transformation process up to humification;
- refining (7) consisting of eliminating the unwanted parts (glass, plastics, metals, etc.) and sieving to separate the coarser pieces so to obtain the desired size.

10. A method according to claim 4, wherein a portion of the air flow sucked through said at least one pile (20) is recycled and the exceeding portion of air flow is passed to a bio-filter (13) from which, after purification, it is released into the atmosphere.

11. A method according to any of the preceding claims, wherein said phase (3) of fermentation/bio-oxidation carried out within said enclosed building (19) is maintained under negative pressure.

12. A method according to claim 9, wherein said phase (5) of slow digestion is carried out by means of at least one air flow passing through said wastes, alternately in two opposite directions.

13. A method according to any of the preceding claims, wherein the air sucked during said phase (3) of fermentation/bio-oxidation through at least one waste pile (20) is recycled inside the plant through a second pile, in such way providing to the heating of the wastes, and the possible exceeding portion of air flow is filtered and then released to the outside.

14. A plant for the aerobic treatment of materials having a highly fermentescible organic component by means of a phase (3) of fermentation/bio-oxidation performed through forced air, said plant comprising an enclosed building (19) defining an inner space for containing at least one pile (20) of wastes and provided with a ventilated paving (23) on which the wastes to be treated during said phase (3) of fermentation/bio-oxidation are laid in and through which passing air flows are provided, and a plenum (27) defined below said ventilated paving (23) to equalise the pressure formed underneath, said ventilated paving (23) being subdivided in a number of independent sections (A...N) and each of said sections being equipped with means (11) for generating a corresponding independent air flow, whereby said at least one pile (20) of wastes is subjected to said phase (3) of fermentation/bio-oxidation through forced air by means of separate and independent air flows passing through said sections (A...N) of said ventilated paving (23);
said plant being **characterised in that** said air flows alternate in two opposite directions by blowing according to a down-top direction and aspirating according to a top-down direction;
said means (11) being arranged for carrying out said phase (3) of fermentation/biooxidation by making flow a series of air flows (9,10) through said at least one waste pile (20), said air flows being directed along substantially parallel directions, some of said flows in one direction (9) and the other ones in the opposite direction (10); some of said air flows (9,10) being top-down directed and some others being bottom-up directed with respect to said at least one pile (20);
wherein said means for generating a corresponding independent air flow comprise at least one fan (11), a pair of by-passes (31,33) and a pair of three-ways valves (55,57) so that the air flow generated by said at least one fan (11) can be directed in two opposite directions (9,10) without interruption of said fans (11) operation.

15. A plant according to claim 14, wherein said ventilated paving (23) is formed by a plurality of concrete tiles (23a...23n) provided with flared slots (24).

16. A plant according to claim 15, wherein said tiles (23a...23n) are supported on prefabricated partitions (25a...25n).

17. A plant according to any of the claims 14 to 16, wherein is further provided:
- at least one section (1) of pre-treatment for pre-treating the wastes intended to be subjected to the phase (3) of fermentation/bio-oxidation through one or more bags-breaker devices and/or one or more sieves;
- at least one section (5) of slow digestion through natural air draught where the transformation of the organic matter coming from the phase (3) of fermentation/biooxidation is completed up to humification;
- at least one section of refining (7) where the unwanted parts (glass, plastics, metals, etc.) are eliminated and a sieving is effectuated to separate the coarser pieces and to obtain the desired size.

18. A plant according to claim 17, wherein said sieves have holes having the diameter in the range 12 to 24 cm, preferably 20 cm.

19. A plant according to claim 17, wherein said treatment through bags-breakers and said sieving are unified by means of specific bags-breaker sieves having high rotation speed.

20. A plant according to any of the claims 14 to 19, wherein the exceeding portion of air flow in the section of fermentation/bio-oxidation, after having passed through the waste pile (20), is partially recycled inside the plant for a further passage through said pile (20), and partially filtered and then released to the outside.

21. A plant according to claim 20, wherein in order to purify the air before releasing it to the outside, a bio-filter (13) is provided, said bio-filter consisting of a filtering bed formed by a layer of a mixture being composed of the final product of the composting process of the "green" portion only, cleansed from foreign matter such as paper, cardboard, plastics and having size in the range 2.5 to 12 cm, and of poplar bark.

## Patentansprüche

1. Verfahren zur aeroben Behandlung von Materialien enthaltend eine hoch fermentierbare organische Substanz, in einer Anlage, die ein abgeschlossenes Gebäude (19) aufweist, das einen Innenraum zur Aufnahme mindestens eines Abfallhaufens (20) aufweist und mit einem belüfteten Belag (23) versehen ist, auf den die Abfälle abgelegt sind, die durch eine mit Druckluft durchgeführte Fermentations/Biooxidationsphase (3) behandelt werden und durch welchen Luftströme strömen, und mit einem Plenum (27), das unterhalb des belüfteten Belags (23) vorgesehen ist, um den darunter gebildeten Druck auszugleichen, wobei dieser belüftete Belag (23) in eine Reihe unabhängiger Abschnitte (A...N) unterteilt ist, die jeweils mit Einrichtungen (11) versehen sind, die einen entsprechend unabhängigen Luftstrom erzeugen, dieses Verfahren umfasst die Schritte:
- mindestens eines Abfallhaufens (20) zur Behandlung im geschlossenen Gebäude (19) und Ablegen des Abfalls auf dem belüfteten Belag (23);
- Unterziehen des mindestens einen Abfallhaufens (20) der Fermentations/Biooxidationsphase (3) mittels Druckluft durch getrennte und unabhängige Luftströme, die durch die Abschnitte (A...N) des belüfteten Belags (23) strömen;
wobei das Verfahren **dadurch gekennzeichnet ist, dass** die Luftströme in zwei entgegengesetzten Richtungen durch Blasen von unten nach oben und Ansaugen von oben nach unten alternieren;
wobei jene Fermentations/Biooxidationsphase (3) durch den Durchgang mehrerer Luftströmungen (9, 10) durch den mindestens einen Abfallhaufen (20) ausgeführt wird und jene Luftströmungen entlang im Wesentlichen paralleler Richtungen geführt werden, einige dieser Strömungen in einer Richtung (9) und die anderen in der entgegengesetzten Richtung (10);
wobei einige dieser Luftströmungen (9, 10) in Bezug auf diese mindestens eine Anhäufung (20) von oben nach unten und andere von unten nach oben gerichtet sind.

2. Verfahren nach Anspruch 1,
wobei jene Strömungen (9, 10) durch Saugen oder Einblasen von Luft in jene mindestens eine Anhäufung (20) erzeugt werden.

3. Verfahren nach Anspruch 2,
wobei der Luftdurchsatz jener Strömungen dadurch aufrechterhalten wird, dass der durch die mindestens eine Anhäufung (20) gesaugte Luftdurchsatz höher ist als der eingeblasene.

4. Verfahren nach einem der vorhergehenden Ansprüche, wobei im Vorlauf jener Phase (3) der Fermentation/Biooxidation eine Phase (1) der Vorbehandlung vorgesehen ist, die durch eine oder mehrere Sackbrechereinrichtungen und/oder ein oder mehrere Siebe ausgeführt wird.

5. Verfahren nach Anspruch 4,
wobei jene Siebe Lochungen mit Durchmessern im Bereich von 12 bis 24 cm, vorzugsweise 20 cm aufweisen.

6. Verfahren nach Anspruch 4,
wobei jene Behandlung durch Sackbrecher und durch Sieben mittels besonderer Sackbrechersiebe mit hoher Drehgeschwindigkeit kombiniert wird.

7. Verfahren nach Anspruch 4,
wobei zwischen der Phase (1) der Vorbehandlung und der Phase (3) der Fermentation/Biooxidation eine Mischphase der Abfälle mit Wirkstoffen vorgesehen ist.

8. Verfahren nach Anspruch 7,
wobei zwischen der Mischphase und der Phase (3) der Fermentation/Biooxidation eine Phase vorgesehen ist, während der mit Sickerwasser geimpft wird und das Sickerwasser während des biologischen Prozesses der Fermentation gewonnen wird.

9. Verfahren nach einem der vorhergehenden Ansprüche, wobei im Nachlauf der Phase (3) der Fermentation/ Biooxidation folgende Phasen vorgesehen sind:
- langsame Zersetzung (5) durch Einblasen, was in der Vollendung des Umwandlungsprozesses des organischen Materials bis hin zur Humifizierung führt.
- Raffination (7), bestehend aus der Aussonderung der unerwünschten Bestandteile (Glas, Plastik, Metall usw.) und Sieben zum Trennen der gröberen Stücke, um so die gewünschte Größe zu erreichen.

10. Verfahren nach Anspruch 4,
wobei ein Teil des Luftstroms, der durch die mindestens eine Anhäufung (20) gesaugt wird, recycelt wird und der überschüssige Teil des Luftstroms einem Biofilter (13) zugeführt wird, aus dem er nach der Reinigung in die Atmosphäre abgegeben wird.

11. Verfahren nach einem der vorhergehenden Ansprüche, wobei die innerhalb des abgeschlossenen Gebäudes (19) stattfindende Phase (3) der Fermentation/ Biooxidation unter Unterdruck gehalten wird.

12. Verfahren nach Anspruch 9,
wobei die Phase (5) der langsamen Zersetzung mittels mindestens eines Luftstroms ausgeführt wird, der die Abfälle wechselweise in zwei entgegengesetzten Richtungen passiert.

13. Verfahren nach einem der vorhergehenden Ansprüche, wobei die während der Fermentations/ Biooxidationsphase (3) durch mindestens einen Abfallhaufen (20) gesaugte Luft innerhalb der Anlage durch einen zweiten Haufen recycelt wird und auf diese Weise die Erwärmung der Abfälle besorgt und der möglicherweise überschüssige Teil des Luftstroms gefiltert wird, um dann in die Umgebung abgegeben zu werden.

14. Anlage zur aeroben Behandlung von Materialien, die eine hoch fermentierbare organische Substanz enthalten mit Hilfe einer Fermentations/ Biooxidationsphase (3), die durch Druckluft erzeugt wird, wobei diese Anlage das abgeschlossene Gebäude (19) aufweist, das einen Innenraum zur Aufnahme mindestens eines Abfallhaufens (20) begrenzt, und mit einem belüfteten Belag (23) versehen ist, auf den die während der Fermentations/. Biooxidationsphase (3) zu behandelnden Abfälle abgelegt werden und durch welche Luftströme strömen, wobei die Anlage ein Plenum (27) aufweist, das unterhalb des belüfteten Belags (23) liegt, um den darunter gebildeten Druck auszugleichen, wobei der belüftete Belag (23) in eine Reihe von unabhängigen Abschnitten (A....N) unterteilt ist und wobei jeder Abschnitt mit Einrichtungen (11) zur Erzeugung eines entsprechenden unabhängigen Luftstroms versehen ist, wobei der wenigstens eine Abfallhaufen (20) der Phase (3) dadurch unterworfen ist, dass Druckluft mittels getrennter und unabhängiger Luftströme durch diese Abschnitte (A....N) des belüfteten Belags (23) gerichtet wird;
wobei die Anlage **dadurch gekennzeichnet ist, dass** die Luftströme in zwei entgegengesetzte Richtungen durch Blasen von unten nach oben und Saugen von oben nach unten alternieren;
wobei die Einrichtungen (11) vorgesehen sind zur Durchführung der Fermentations/Biooxidationsphase (3) durch den Durchgang mehrerer Luftströmungen (9,10) durch den mindestens einen Abfallhaufen (20), wobei diese Luftströmungen entlang im Wesentlichen paralleler Richtungen geführt sind, einige dieser Strömungen in einer Richtung (9) und die anderen in der entgegengesetzten Richtung (10); wobei einige dieser Luftströmungen (9,10) in Bezug auf die mindestens eine Anhäufung (20) von oben nach unten und andere von unten nach oben gerichtet sind; wobei die Einrichtungen zur Erzeugung eines entsprechenden unabhängigen Luftstroms mindestens einen Ventilator (11) umfassen sowie ein Paar von Bypässen (31, 33) und ein Paar Dreiwegeventile (55, 57), so dass der durch den mindestens einen Ventilator (11) erzeugte Luftstrom ohne Betriebsunterbrechung des Ventilators (11) in zwei entgegengesetzte Richtungen (9, 10) geleitet werden kann.

15. Anlage nach Anspruch 14,
wobei der belüftete Belag (23) durch eine Vielzahl von mit Öffnungsschlitzen (24) versehenen Fliesen (23a...23n) gebildet wird.

16. Anlage nach Anspruch 15,
wobei die Fliesen (23a...23n) auf vorgefertigten Trennwänden (25a...25n) abgestützt sind.

17. Anlage nach einem der Ansprüche 14 bis 16, wobei weiterhin vorgesehen ist:
- mindestens eine Vorstufe (1) zur Vorbehandlung jener Abfälle, die der Fermentations/Biooxidations-phase (3) unterzogen werden sollen durch eine oder mehrere Sachbrechervorrichtungen und/oder durch ein oder mehrere Siebe;
- mindestens ein Abschnitt (5) der langsamen Zersetzung durch natürlichen Luftzug, wo die Umwandlung des von der Fermentations/ Biooxidationsphase (3) kommenden organischen Materials bis zur Humifikation vollendet wird;
- mindestens ein Raffinationsabschnitt (7), wo die unerwünschten Bestandteile (Glas, Plastik, Metall usw.) ausgeschieden werden und eine Siebung durchgeführt wird, um die gröberen Stücke zu trennen und die gewünschte Größe zu erzielen.

18. Anlage nach Anspruch 17,
wobei die Siebe Lochungen im Durchmesserbereich von 12 bis 24 cm, vorzugsweise 20 cm, aufweisen.

19. Anlage nach Anspruch 17,
wobei jene Behandlung durch Sackbrecher und durch Sieben durch besondere Sackbrechersiebe mit hoher Drehgeschwindigkeit kombiniert wird.

20. Anlage nach einem der Ansprüche 14 bis 19,
wobei der überschüssige Teil des Luftstroms im Abschnitt der Fermentation/Biooxidation, nachdem er den Abfallhaufen (20) passiert hat, innerhalb der Anlage für einen weiteren Durchgang durch den Haufen (20) teilweise recycelt, sowie teilweise gefiltert und dann nach außen freigesetzt wird.

21. Anlage nach Anspruch 20,
wobei zwecks Reinigung der Luft vor der Freisetzung nach außen ein Biofilter (13) vorgesehen ist und dieses Biofilter aus einem Filterbett besteht, das durch eine Schicht gebildet wird, die aus dem Endprodukt des Kompostierprozesses - nur des "grünen" Anteils - zusammengestellt ist und von Fremdkörpern wie Papier, Karton, Plastik in der Größe von 2,5 bis 12 cm sowie von Pappelrinde gereinigt ist.

## Revendications

1. Procédé pour le traitement aérobie de matériaux comportant un composant organique à forte capacité de fermentation dans une usine comprenant un bâtiment fermé (19) définissant un espace intérieur destiné à contenir au moins un tas (20) de déchets et pourvu d'une surface pavée ventilée (23) sur laquelle les déchets à traiter pendant une phase (3) de fermentation/bio-oxydation exécutée par l'intermédiaire d'une circulation d'air forcé, sont déposés et à travers lesquels des circulations de courants d'air sont prévus, et une chambre 27 collectrice d'air définie au-dessous de ladite surface pavée ventilée 23 pour égaliser la pression formée au-dessous, ladite surface pavée ventilée (23) étant subdivisée en un certain nombre de sections indépendantes (A ... N), chacune desdites sections étant pourvue de moyens (11) pour générer un courant d'air indépendant correspondant, ledit procédé comportant les étapes consistant à :
- introduire au moins un tas (20) de déchets à traiter dans ledit bâtiment fermé (19) et étaler lesdits déchets sur ladite surface pavée ventilée (23) ;
- soumettre au moins un tas (20) de déchets à ladite phase (3) de fermentation/bio-oxydation par de l'air forcé au moyen de courants d'air séparés et indépendants passant à travers lesdites sections (A ... N) de ladite surface pavée ventilée (23);
**caractérisée en ce que** lesdits courants d'air alternent suivant deux directions opposées, l'air étant soufflé selon une direction de bas en haut et aspiré selon une direction de haut en bas, dans lequel ladite phase (3) de fermentation/bio-oxydation est réalisée en faisant circuler une série de courants d'air (9,10) à travers ledit (lesdits) tas de déchets (20), lesdits courants d'air étant dirigés le long de directions essentiellement parallèles, certains desdits courants d'air allant dans une direction (9) et les autres dans la direction opposée (10) ;
dans lequel certains desdits courants d'air (9, 10) sont dirigés de haut en bas et certains autres dirigés de bas en haut par rapport audit (aux dits) tas (20).

2. Procédé selon la revendication 1, dans lequel lesdits courants d'air (9, 10) sont générés par aspiration ou par opération de soufflage d'air à travers ledit (lesdits) tas (20).

3. Procédé selon la revendication 2, dans lequel le débit desdits courants d'air est maintenu de telle sorte que le débit d'air aspiré à travers ledit (lesdits) tas (20) soit plus élevé que celui de l'air soufflé.

4. Procédé selon l'une quelconque des revendications précédentes, dans lequel en amont de ladite phase (3) de fermentation/bio-oxydation est prévue une phase (1) de pré-traitement réalisée par un ou plusieurs dispositif(s) de destruction de sacs et/ou un ou plusieurs cribles.

5. Procédé selon la revendication 4 dans lequel lesdits cribles comportent des trous ayant un diamètre se situant dans la plage de 12 à 24 cm, de préférence 20 cm.

6. Procédé selon la revendication 4 dans lequel ledit traitement réalisé par les dispositifs de destruction de sacs et ledit criblage sont réunis au moyen de cribles spécifiques de destruction de sacs ayant.une vitesse de rotation élevée.

7. Procédé selon la revendication 4 dans lequel entre ladite phase (1) de pré-traitement et ladite phase (3) de fermentation/bio-oxydation une phase de mélange des déchets avec un matériau structurant est prévue.

8. Procédé selon la revendication 7 dans lequel entre ladite phase de mélange et ladite phase (3) de fermentation/bio-oxydation une phase est prévue pendant laquelle de l'eau de percolation est introduite, ladite eau de percolation étant produite pendant le processus biologique de fermentation.

9. Procédé selon l'une quelconque des revendications précédentes, dans lequel en aval de ladite phase (3) de fermentation/bio-oxydation les phases suivantes sont prévues :
- digestion lente (5) à travers une opération de soufflage consistant à achever le processus de transformation de la matière organique jusqu'à humidification ;
- raffinage (7) consistant à éliminer les éléments indésirables (verre, plastiques, métaux, etc.) et à les cribler afin de séparer les pièces plus grossières de façon à obtenir la dimension souhaitée.

10. Procédé selon la revendication 4 dans lequel une partie du flux d'air aspiré à travers ledit (lesdits) tas (20) est recyclé et la partie en excès du flux d'air passe à travers un bio-filtre (13) à partir duquel, après purification, elle est relâchée dans l'atmosphère.

11. Procédé selon l'une quelconque des revendications précédentes dans lequel ladite phase (3) de fermentation/bio-oxydation réalisée à l'intérieur dudit bâtiment fermé (19) est maintenue sous une pression négative.

12. Procédé selon la revendication 9, dans lequel ladite phase (5) de digestion lente est réalisée au moyen d'au moins un courant d'air passant à travers lesdits déchets, alternativement dans deux directions opposées.

13. Procédé selon l'une quelconque des revendications précédentes, dans lequel l'air aspiré pendant ladite phase (3) de fermentation/bio-oxydation à travers au moins un tas de déchets (20) est recyclé à l'intérieur de l'usine à travers un second tas, de manière à pourvoir au chauffage des déchets, et la partie excédentaire possible de courant d'air est filtrée et ensuite libérée à l'extérieur.

14. Usine destinée au traitement aérobie de matériaux comportant un composant organique à forte capacité de fermentation au moyen d'une phase (3) de fermentation/bio-oxydation réalisée par circulation d'air forcé, ladite usine comportant un bâtiment fermé (19) définissant un espace intérieur destiné à contenir au moins un tas (20) de déchets et pourvu d'une surface pavée ventilée (23) sur laquelle les déchets à traiter pendant ladite phase (3) de fermentation/bio-oxydation sont déposés et à travers laquelle des circulations de courants d'air sont prévues, et une chambre collectrice d'air (27) définie au-dessous de ladite surface pavée ventilée (23) pour égaliser la pression formée en dessous, dans ladite surface pavée ventilée (23) est subdivisée en un certain nombre de sections indépendantes (A ... N) et dans chacune desdites sections est dotée de moyens (11) pour générer un courant d'air indépendant correspondant, dans ledit (lesdits) tas (20) de déchets est (sont) soumis à ladite phase (3) de fermentation/bio-oxydation par circulation d'air forcé au moyen de courants d'air indépendants et séparés passant à travers lesdites sections (A ... N) de ladite surface pavée ventilée (23);
**caractérisée en ce que** lesdits courants d'air alternent dans deux directions opposées en soufflant selon une direction de bas en haut et en aspirant selon une direction de haut en bas;
et **caractérisée en ce que** les moyens (11) sont disposés pour réaliser ladite phase (3) de fermentation/bio-oxydation en faisant circuler une série de courants d'air à travers ledit (lesdits) tas de déchets (20), lesdits courants d'air étant dirigés le long de directions essentiellement parallèles, certains desdits courants d'air allant dans une direction (9) et les autres dans la direction opposée (10);
dans lequel certains desdits courants d'air (9, 10) sont dirigés de haut en bas et certains autres dirigés de bas en haut par rapport audit (aux dits) tas (20);
dans laquelle lesdits moyens pour générer un flux d'air indépendant correspondant comportent au moins un ventilateur (11), une paire de conduites de dérivation (31, 33) et une paire de vannes à trois voies (55, 57) de façon que le flux d'air généré par ledit (lesdits) ventilateur(s) (11) puisse être dirigé dans deux directions opposées (9, 10) sans interruption de fonctionnement desdits ventilateurs (11).

15. Usine selon la revendication 14, dans laquelle ladite surface pavée ventilée (23) est formée d'une pluralité de dalles de béton (23a ... 25n) dotées de fentes évasées (24).

16. Usine selon la revendication 15 dans laquelle lesdites dalles (23a ... 23n) sont supportées sur des cloisons préfabriquées (25a ... 25n).

17. Usine selon l'une quelconque des revendications 14 à 16, dans laquelle il est prévu, de plus:
- au moins une section (1) de pré-traitement pour pré-traiter les déchets prévus pour être soumis à la phase (3) de fermentation/bio-oxydation à l'aide d'un ou de plusieurs dispositif(s) de destruction de sacs et/ou d'un ou de plusieurs crible(s) ;
- au moins une section (5) de digestion lente à travers un courant d'air naturel où la transformation de la matière organique provenant de la phase (3) de fermentation/bio-oxydation est menée jusqu'à l'humidification ;
- au moins une section de raffinage (7) où les parties indésirables (verre, matières plastiques, métaux, etc.) sont éliminées et un criblage est effectué pour séparer les pièces plus grossières et obtenir la dimension souhaitée.

18. Usine selon la revendication 17 dans laquelle lesdits cribles présentent des trous ayant un diamètre se situant dans la plage de 12 à 24 cm, de préférence, 20 cm.

19. Usine selon la revendication 17 dans laquelle ledit traitement par les dispositifs de destruction de sacs et ledit criblage sont réunis au moyen de cribles spécifiques de destruction de sacs ayant une vitesse de rotation élevée.

20. Usine selon l'une quelconque des revendications 14 à 19 dans laquelle la partie en excès d'air circulant dans la section de fermentation/bio-oxydation, après avoir traversé le tas de déchets (20) est partiellement recyclée à l'intérieur de l'usine pour un autre passage à travers ledit tas (20), et en partie filtrée et ensuite relâchée vers l'extérieur.

21. Usine selon la revendication 20 dans laquelle, afin de purifier l'air avant de le relâcher vers l'extérieur, un bio-filtre (13) est prévu, ledit bio-filtre étant constitué d'un lit de filtration formé d'une couche d'un mélange composé du produit fini du procédé de compostage de la partie "verte" seulement, débarrassé de matières étrangères telles que papier, carton, plastiques et présentant une dimension se situant dans la plage de 2,5 à 12 cm, et d'écorce de peuplier.
